# FASCICULE DE BREVET EUROPEEN

(11) **EP 3 254 878 B1**
(45) Date de publication et mention de la délivrance du brevet: **07.11.2018**
(21) Numéro de dépôt: 17170996.7
(22) Date de dépôt: 15.05.2017
(51) Int. Cl.: B60K 6/387, B60K 6/40, F16D 47/00, F16D 25/00, F16D 11/14, H02K 7/108

(54) **DISPOSITIF DE TRANSMISSION DE COUPLE, NOTAMMENT POUR VEHICULE AUTOMOBILE**
DREHMOMENTÜBERTRAGUNGSVORRICHTUNG, INSBESONDERE FÜR KRAFTFAHRZEUG
TORQUE TRANSMISSION DEVICE, IN PARTICULAR FOR A MOTOR VEHICLE

(30) Priorité: 09.06.2016 FR 1655324
(43) Date de publication de la demande: 13.12.2017
(73) Titulaire: Valeo Embrayages, 80009 Amiens Cedex 2 (FR)
(72) Inventeur: LEBAS, Gilles, 80009 Amiens (FR); COMMEINE, Emmanuel, 80009 Amiens (FR)
(74) Mandataire: Cardon, Nicolas

(56) Documents cités:
- WO-A2-2015/075365
- DE-A1- 4 201 234
- DE-A1-102007 050 235
- DE-A1-102009 047 766
- DE-A1-102013 214 325
- FR-A1- 2 845 139

## Description

La présente invention concerne un dispositif de transmission de couple, notamment pour véhicule automobile, ainsi qu'un système de motorisation hybride équipé d'un tel dispositif.

On connaît un dispositif de transmission pour véhicule automobile hybride, comprenant deux embrayages et une machine électrique, disposés entre le moteur à combustion interne du véhicule et sa boîte de vitesses. Un tel dispositif est, par exemple, décrit dans le document FR 2 830 589. Chacun des embrayages comporte un disque de friction, une butée d'embrayage et un plateau de pression monté mobile axialement par rapport audit plateau de réaction entre une position embrayée dans laquelle le disque de friction est pincé entre lesdits plateaux de pression et de réaction et une position débrayée. Les deux embrayages sont disposés de part et d'autre de la machine électrique. Le plateau de pression d'un premier embrayage, disposé côté moteur, est configuré pour être associé au vilebrequin du moteur à combustion interne. Le disque de friction du premier embrayage est monté solidaire en rotation d'un arbre intermédiaire qui est fixé à un moyeu de support du rotor de la machine électrique. Le plateau de pression ainsi que le plateau de réaction du second embrayage, disposé côté boîte de vitesses, sont montés solidaires en rotation dudit moyeu de support du rotor et le disque de friction dudit second embrayage est destiné à coopérer avec un arbre d'entrée d'une boîte de vitesses.

L'embrayage, côté moteur, permet donc d'accoupler en rotation le vilebrequin du moteur à combustion au rotor de la machine électrique et l'embrayage, côté boîte de vitesses, permet d'accoupler le rotor à l'arbre d'entrée de la boîte de vitesses. Ainsi, on peut couper le moteur à combustion interne à chaque arrêt et le redémarrer grâce à la machine électrique. La machine électrique peut également constituer un frein électrique ou apporter un surplus d'énergie au moteur à combustion pour l'assister ou éviter que celui-ci ne cale. Lorsque le moteur tourne, la machine électrique peut jouer le rôle d'un alternateur.

La machine électrique peut être une machine électrique tournante réversible du type alterno-démarreur ou du type moteur-générateur. Dans un mode de fonctionnement de type démarreur, l'embrayage situé côté moteur est embrayé et la machine électrique permet le démarrage du moteur à combustion interne. Dans un mode de fonctionnement de type alternateur, la machine électrique permet de recharger une batterie du véhicule et/ou d'alimenter les organes ou équipements consommateurs d'énergie lorsque le moteur à combustion interne tourne. Elle est en outre configurée pour récupérer de l'énergie lors du freinage du véhicule. La machine électrique peut notamment être configurée pour arrêter le moteur à combustion interne, par exemple, au feu rouge ou dans les bouchons, et le redémarrer ensuite (Fonction Stop and Go en Anglais). Dans un mode de réalisation, elle est apte à fournir un surplus de puissance permettant d'éviter que le moteur cale (fonction boost en Anglais). Par ailleurs, la machine électrique peut être apte à entraîner le véhicule, au moins sur une courte distance, l'embrayage situé du côté moteur étant alors désengagé et le moteur à combustion interne arrêté.

Un tel dispositif est relativement complexe, onéreux et encombrant.

La demande de brevet DE 10 2015 211 436 divulgue un dispositif de transmission pour véhicule hybride comportant notamment :
- un volant d'entrée de couple, solidaire en rotation d'un vilebrequin d'un moteur à combustion interne,
- un moyeu de sortie de couple, solidaire en rotation d'un arbre d'entrée d'une boîte de vitesses,
- un support solidaire en rotation d'un rotor d'une machine électrique,
- des moyens de commande aptes à coupler en rotation le volant et le rotor au travers d'un premier chemin de passage de couple comportant des moyens d'amortissement élastique et dépourvu de moyens d'embrayage, lesdits moyens de commande étant aptes à coupler en rotation le volant, le rotor et l'arbre d'entrée de la boîte de vitesses au travers d'un second chemin de passage de couple comportant lesdits moyens d'amortissement élastique et des moyens d'embrayage.

Ainsi, dans le premier mode de fonctionnement, la machine électrique, et plus particulièrement le rotor, peut entraîner en rotation le vilebrequin de façon à redémarrer le moteur électrique si celui-ci a été arrêté (Fonction Stop and Go en Anglais). Par ailleurs, dans le second mode de fonctionnement, si les moyens d'embrayage sont en position embrayée, l'arbre d'entrée de la boîte de vitesses peut être entraîné en rotation par le moteur thermique.

Dans le premier mode de fonctionnement, le couplage entre le volant et le rotor est réalisé à l'aide d'organes dentés. Lors d'un tel couplage en rotation, il est important de maîtriser le couple transmis du rotor au volant, au risque de générer des à-coups et détériorer de façon prématurée lesdits organes dentés et/ou le moteur thermique. Un tel contrôle du couple est, dans la pratique, complexe à réaliser.

Le document DE 10 2009 047766 A1 divulgue un dispositif de transmission de couple comprenant un embrayage et un système de crabots pouvant être sélectivement engagés.

Le document FR 845 139 A1 divulgue un dispositif de transmission de couple selon le préambule de la revendication 1.

L'invention a notamment pour but d'apporter une solution simple, efficace et économique aux problèmes précités.

A cet effet, elle propose un dispositif de transmission de couple, notamment pour véhicule automobile, comportant des moyens d'entrée de couple, destinés à être couplés en rotation à un vilebrequin d'un moteur à combustion interne, des moyens de sortie de couple, destinés à être couplés en rotation à un arbre d'entrée d'une boîte de vitesses et à un rotor d'une machine électrique, les moyens d'entrée de couple étant aptes à pivoter par rapport aux moyens de sortie de couple autour d'un axe, comportant des moyens de commande sélectivement aptes à :
- dans un premier mode de fonctionnement, coupler en rotation les moyens d'entrée de couple et les moyens de sortie de couple, par un premier chemin de passage de couple comportant des moyens d'embrayage, ou
- dans un second mode de fonctionnement, coupler en rotation les moyens d'entrée de couple et les moyens de sortie de couple, par un second chemin de passage de couple dépourvu de moyens d'embrayage.

Ainsi, dans le premier mode de fonctionnement, le vilebrequin peut être entraîné en rotation par le rotor de la machine électrique, de manière à pouvoir redémarrer le moteur thermique si celui-ci a été arrêté par exemple, par l'intermédiaire des moyens d'embrayage qui permettent de contrôler efficacement et simplement le couple fourni au vilebrequin. On évite ainsi les à-coups et tout risque de détérioration du moteur thermique et du dispositif de transmission de couple.

Selon l'invention, les moyens de commande sont aptes à, dans un troisième mode de fonctionnement, découpler en rotation les moyens d'entrée de couple et les moyens de sortie de couple.

Le troisième mode de fonctionnement correspond ainsi à un mode dit neutre. Dans un tel mode de fonctionnement, la machine électrique peut par exemple être apte à entraîner l'arbre d'entrée de la boîte de vitesses, et donc le véhicule, au moins sur une courte distance.

Les moyens de commande comportent une butée d'embrayage comprenant un organe d'actionnement mobile entre :
- une première position axiale correspondant au premier mode de fonctionnement, et
- une seconde position axiale correspondant au second mode de fonctionnement, et
- une troisième position axiale correspondant au troisième mode de fonctionnement.
Selon l'invention, la troisième position axiale est située axialement entre les première et seconde positions axiales.

De cette manière, on garantit que les premier et second modes ne peuvent pas être enclenchés simultanément.

Les moyens de commande peuvent comporter un organe de transmission comprenant une première zone de couplage destinée à être couplée en rotation à l'arbre d'entrée de la boîte de vitesses, et une seconde zone de couplage, l'organe de transmission étant mobile axialement avec l'organe d'actionnement mobile de la butée d'embrayage, la seconde zone de couplage étant couplée aux moyens d'entrée de couple dans la deuxième position axiale.

Dans ce cas, la première zone de couplage peut être située radialement à l'intérieur de l'organe de transmission, la seconde zone de couplage étant située radialement à l'extérieur de l'organe de transmission.

Les moyens d'embrayage peuvent comporter au moins deux plateaux et au moins un disque de friction situé axialement entre les deux plateaux, le disque de friction, ou respectivement les plateaux, étant couplé en rotation à un moyeu appartenant aux moyens de sortie de couple, les plateaux, respectivement le disque de friction, étant couplés aux moyens d'entrée de couple, les plateaux étant rapprochés axialement l'un de l'autre de façon à enserrer le disque de friction dans le premier mode de fonctionnement.

De manière générale, les moyens d'embrayage peuvent comporter une alternance de plateaux et de disques de friction.

Les moyens d'embrayage peuvent comporter un diaphragme apte à basculer entre une position embrayée dans laquelle il tend à enserrer le disque de friction entre les plateaux, et une position débrayée dans laquelle il libère le disque de friction, l'organe d'actionnement étant apte à venir en appui sur le diaphragme de manière à le déplacer vers sa position embrayée dans la première position axiale de l'organe d'actionnement.

Le diaphragme peut être annulaire, l'organe d'actionnement venant en appui sur la périphérie radialement interne du diaphragme dans la première position axiale, le diaphragme étant monté basculant autour d'une première zone d'appui radialement externe, le diaphragme venant en appui sur l'un des plateaux, directement ou indirectement, dans une seconde zone d'appui située radialement à l'intérieur de la première zone d'appui.

Les moyens d'embrayage peuvent également comporter un voile annulaire interposé entre le diaphragme et les moyens de commande, plus précisément entre le diaphragme et l'organe de transmission. Le voile annulaire peut être couplé en rotation au diaphragme sur la périphérie extérieure du diaphragme. La périphérie radialement intérieure de l'organe d'actionnement peut venir en appui sur l'organe d'actionnement pour exercer un effort axial vers l'avant tendant à ramener l'organe d'actionnement dans la position qu'il occupe dans le troisième mode de fonctionnement. Le voile annulaire permet un rappel mécanique des moyens de commande vers l'arrière. Le voile peut assurer en permanence un contact entre le diaphragme et les moyens de commande pour éviter un différentiel de vitesses entre les deux éléments qui pourrait générer de l'usure ou du bruit. Le voile annulaire peut également être remplacé par une pluralité de doigts distincts les uns des autres.

Une telle structure correspond ainsi à un embrayage de type normalement ouvert. L'élasticité du diaphragme est telle que, lorsqu'il n'est pas sollicité par l'organe d'actionnement, il est rappelé vers sa position de repos, à savoir sa position ouverte ou débrayée.

Bien entendu, les points d'appui peuvent être disposés différemment, dans le cas d'un embrayage de type normalement fermé. Dans ce cas, lorsque le diaphragme n'est pas sollicité par l'organe d'actionnement (position de repos), le diaphragme est rappelé vers sa position fermée ou embrayée.

Les moyens d'entrée de couple peuvent comporter un couvercle logeant, au moins en partie, les moyens d'embrayage, l'organe d'actionnement, l'organe de transmission et/le moyeu.

Les moyens d'entrée de couple peuvent comporter un organe de liaison couplé en rotation au couvercle, la seconde zone de couplage de l'organe de transmission venant en prise avec l'organe de liaison, dans la deuxième position axiale de l'organe d'actionnement et de l'organe de transmission.

Le dispositif peut également comporter l'une ou plusieurs des caractéristiques suivantes :
- la première zone de couplage est radialement interne et comporte des cannelures ou des dents aptes à coopérer avec des cannelures complémentaires de l'arbre d'entrée de la boîte de vitesses,
- la seconde zone de couplage est radialement externe et comporte des cannelures ou des dents coopérant avec des cannelures ou des dents complémentaires de l'organe de liaison, dans le second mode de fonctionnement,
- l'organe de liaison comporte des dents ou des cannelures radialement externes, aptes à coopérer avec des cannelures du couvercle de manière à coupler en rotation l'organe de liaison et le couvercle,
- l'organe de liaison est maintenu axialement par rapport au couvercle, entre deux anneaux élastiques ou circlips montés dans des gorges du couvercle,
- la première zone d'appui du diaphragme est formée par une bague venant en appui sur un anneau élastique ou circlip monté dans une gorge du couvercle. Cet anneau élastique peut notamment être un des deux anneaux qui maintiennent axialement l'organe de liaison.
- le couvercle comporte une partie radiale dont la périphérie radialement externe est prolongée par une partie cylindrique,
- au moins l'un des plateaux des moyens d'embrayage est apte à venir en appui axial, directement ou indirectement, sur la partie radiale du couvercle,
- au moins un palier, par exemple une butée à roulement, est monté axialement entre l'organe d'actionnement et l'organe de transmission,
- au moins un palier, par exemple une butée à roulement, est monté axialement entre l'organe de transmission et le diaphragme.

L'invention concerne également un système de motorisation hybride comprenant :
- un moteur à combustion interne comportant un vilebrequin apte à être entraîné en rotation autour d'un axe,
- une machine électrique comportant un stator et un rotor apte à être entraîné en rotation par rapport au stator autour de l'axe,
- une boîte de vitesses comportant un arbre d'entrée,
- un dispositif de transmission de couple du type précité, le rotor, l'arbre d'entrée de la boîte de vitesses et les moyens de sortie de couple étant couplés en rotation,
- les moyens d'entrée de couple et le vilebrequin étant couplés en rotation.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 et 2 sont des vues en perspective avec écorché partiel d'un dispositif de transmission de couple selon une forme de réalisation de l'invention,
- les figures 3, 4 et 5 sont des vues en coupe axiale du dispositif de la figure 1, dans différentes positions axiales de l'organe de commande et de l'organe de transmission, le rotor, le moteur thermique et la boîte de vitesses ayant été représentés schématiquement à la figure 3.

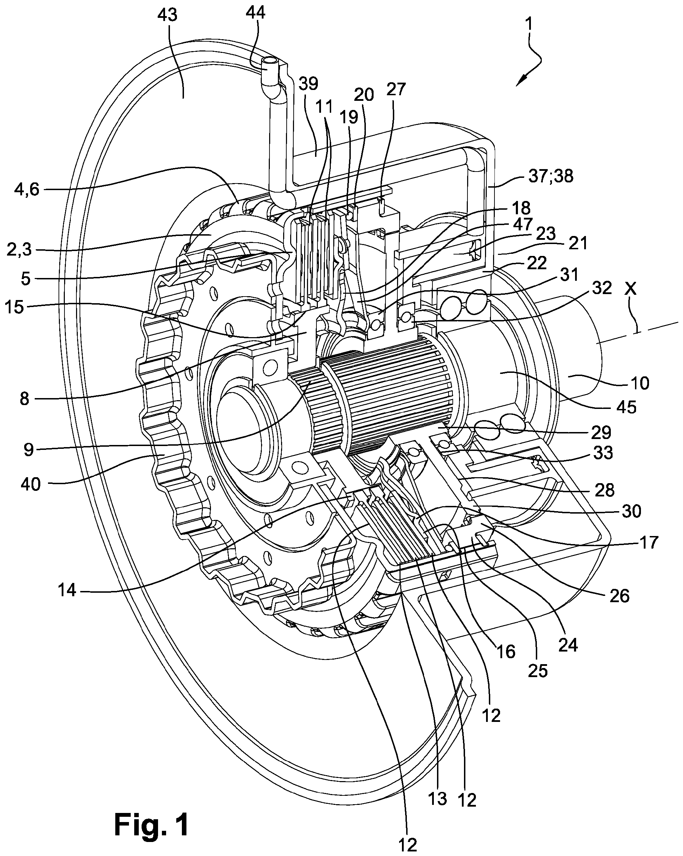

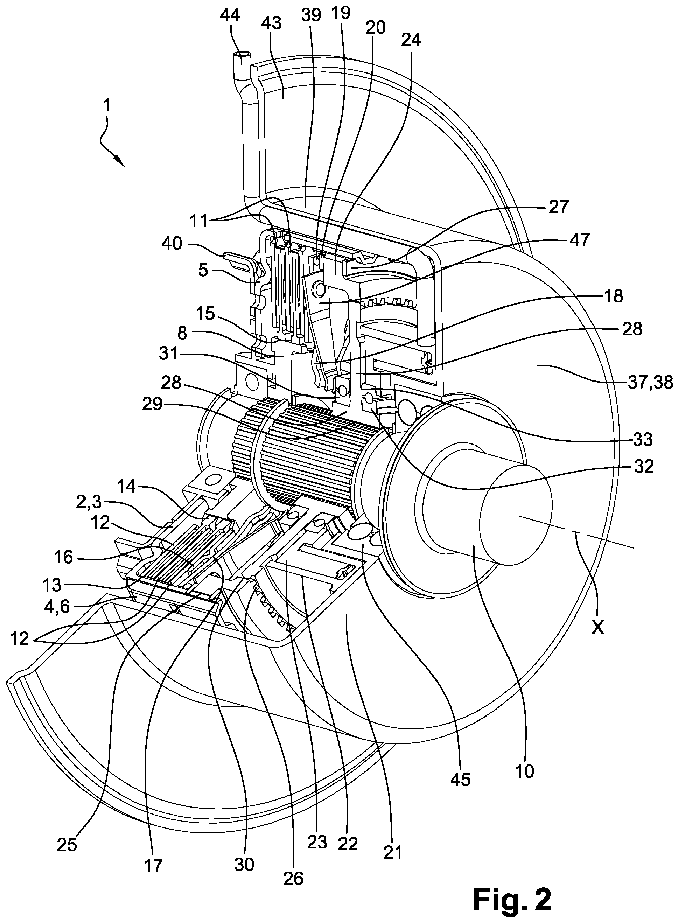

Les figures 1 à 5 représentent un dispositif de transmission de couple 1, notamment pour véhicule automobile, selon une forme de réalisation de l'invention.

Celui-ci comporte un couvercle 2 d'axe X, comportant une partie radiale 3 annulaire dont la périphérie radialement externe est prolongée par une partie cylindrique 4 s'étendant vers l'avant.

Les termes « radial », « axial » et « circonférentiel » sont définis par rapport à l'axe X.

La face avant de la partie radiale comporte une zone d'appui 5 en saillie et de forme annulaire, de section arrondie. La zone d'appui 5 est par exemple formée par déformation de la matière du couvercle, par exemple par emboutissage.

La partie cylindrique 4 comporte une succession de cannelures 6 s'étendant axialement et réparties sur toute la circonférence.

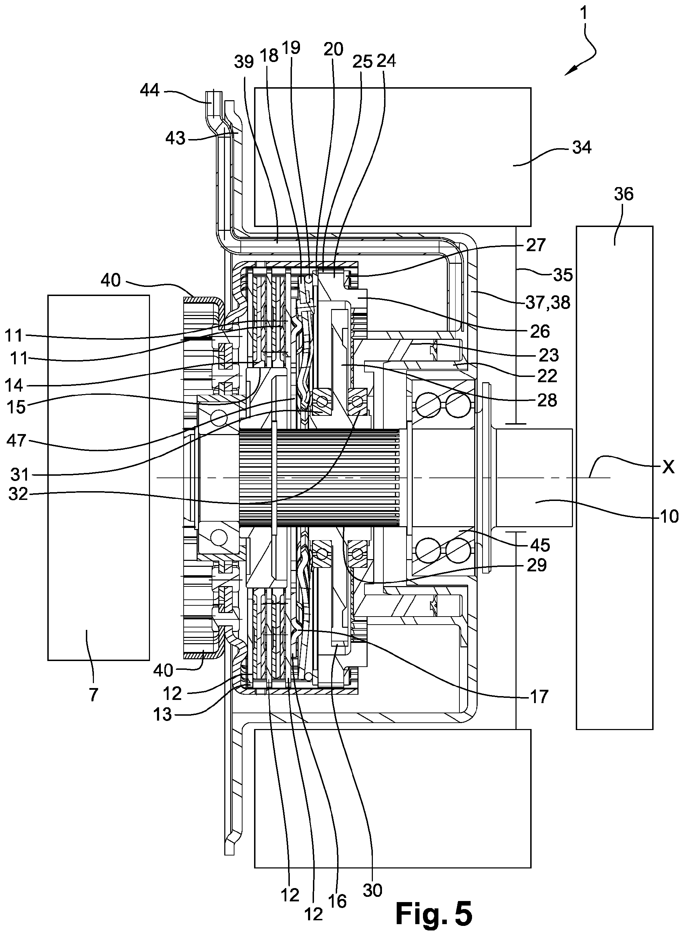

La partie radiale est destinée à être couplée en rotation à un vilebrequin d'un moteur à combustion interne 7 (figure 4) par l'intermédiaire d'une pièce de connexion étoilée 40 située à axialement à l'arrière de la partie cylindrique 4. La pièce de connexion 40 peut notamment être couplée en rotation à un dispositif d'amortisseur de vibration, par exemple un double volant amortisseur.

Le couvercle 2 et la pièce de connexion sur portés axialement par l'arbre d'entrée de la boite de vitesses par l'intermédiaire d'un palier à roulement 46. Bien que cela ne soit pas représenté le couvercle et la pièce de connexion pourrait être portés par un amortisseur de torsion disposé entre le moteur à combustion interne et le couvercle.

Le dispositif 1 comporte en outre des moyens d'embrayage comportant un moyeu central 8 dont la périphérie radialement interne est cannelée et coopère avec des cannelures 9 d'un arbre d'entrée 10 d'une boîte de vitesses. Le moyeu central 8 et l'arbre d'entrée 10 de la boîte de vitesses sont ainsi couplés en rotation.

Les moyens d'embrayage comportent en outre des disques de friction 11 intercalés entre des plateaux annulaires 12.

Dans la forme de réalisation représentée, les moyens d'embrayage comportent trois plateaux 12 et deux disques de frictions 11, les plateaux 12 et les disques de friction 11 étant montés en alternance. Les moyens d'embrayage peuvent également comporter un disque de friction ou 3 disques de friction, respectivement 2 plateaux ou 4 plateaux.

Les périphéries externes des plateaux 12 comportent des dents 13 aptes à venir en prise dans les cannelures 6 du couvercle 2, de façon à coupler en rotation les plateaux 12 et le couvercle 2 tout en autorisant le déplacement axial des plateaux 11.

Les périphéries internes des disques de friction 11 comportent des dents 14 aptes à venir en prise avec des cannelures 15 de la périphérie radialement externe du moyeu central 8 de manière à coupler en rotation les disques de friction 11 et le moyeu central 8 tout en autorisant un déplacement axial des disques de friction 11 par rapport au moyeu 8.

Le plateau 12 arrière est apte à venir en appui sur la partie radiale 3 du couvercle 2, en particulier sur la zone annulaire en saillie 5 du couvercle 2.

Un organe d'appui 16 est monté en avant du plateau 12 avant, l'organe d'appui 16 comportant une partie d'appui 17 annulaire en saillie vers l'avant.

Les moyens d'embrayage comporte en outre un diaphragme 18 dont la périphérie externe est apte à venir en appui sur une rondelle torique ou jonc 19, située directement en avant du diaphragme 18, ladite rondelle 19 étant elle-même en appui sur un anneau élastique ou circlip 20, monté en avant de la rondelle conique, dans une gorge ménagée dans la partie cylindrique 4 du couvercle 2. La rondelle d'appui 19 est donc fixe axialement par rapport au couvercle 2.

Les moyens d'embrayage peuvent également comporter un voile annulaire 47 couplé en rotation au diaphragme 18 sur sa périphérie extérieure au moyen de rivets. En variante, en remplacement du voile 47, des doigts disposés autour de l'axe et distincts les uns des autres sont prévus.

La zone d'appui 17 de l'organe 16 est apte à prendre appui sur le diaphragme 18, dans une zone située radialement à l'intérieur de la rondelle d'appui 19.

Le dispositif 1 comporte en outre des moyens de commande comportant une butée d'embrayage 21. Ladite butée d'embrayage 21 comporte une partie 22 fixe par rapport à un couvercle additionnel 37 et un organe d'actionnement 23 mobile par rapport à la partie fixe 22 dans la direction axiale. L'organe d'actionnement 23 peut être formé par un écrou ou par un piston, par exemple, comme cela est connu en soi.

Le couvercle additionnel 37 peut être prévu, ledit couvercle additionnel 37 logeant le couvercle 2 et la butée d'embrayage 21. Le couvercle additionnel 37 comporte ici une partie radiale 38 avant, annulaire et entourant l'arbre d'entrée 10, dont la périphérie radialement externe est prolongée vers l'arrière par une partie axiale 39 qui se termine à l'arrière par un rebord d'extension radiale vers l'extérieur 43. La partie radiale 38 comporte également une extrémité intérieure interposée radialement entre la partie fixe 22 et un palier à roulement 45. La partie fixe 22 et la partie radiale 38 sont portées axialement par l'arbre d'entrée 10 de la boite de vitesses par l'intermédiaire de ce palier à roulement 45.

Un tuyau d'alimentation 44 est également prévu pour alimenter fluidiquement la butée d'embrayage 21. Ce tuyau d'alimentation 44 est fixé sur le couvercle additionnel et débouche à l'extérieur de celui-ci.

Un organe de liaison 24 est monté à l'intérieur de la partie cylindrique 4 du couvercle 2. L'organe de liaison 24 comporte des dents 25 à sa périphérie radialement externe et des dents 26 à sa périphérie radialement interne. La périphérie radialement externe de l'organe de liaison 24 est située axialement à l'arrière par rapport à la périphérie radialement interne. Les dents 25 de la périphérie radialement externe coopèrent avec les cannelures 6 de la partie cylindrique 4 du couvercle 2 de manière à coupler en rotation l'organe de liaison 24 et le couvercle 2. L'organe de liaison 24 est maintenu axialement entre deux organes élastiques ou circlips 27 et 20 disposés respectivement à l'avant et à l'arrière, montés dans des gorges du couvercle 2.

Un organe de transmission 28 annulaire est monté autour de l'arbre d'entrée 10 de la boîte de vitesses. L'organe de transmission 28 s'étend radialement et comporte des dents 29 à sa périphérie radialement interne et des dents 30 à sa périphérie radialement externe.

Les dents 29 de la périphérie radialement interne coopèrent avec les cannelures 9 de l'arbre d'entrée 10 de la boîte de vitesses et les dents 30 de la périphérie externe peuvent être aptes à coopérer avec les dents 26 de la périphérie interne de l'organe de liaison 24, en fonction de la position axiale de l'organe de transmission 28.

L'organe de transmission 28 est ainsi couplé en rotation à l'arbre d'entrée 10 de la boîte de vitesses tout en pouvant être déplacé axialement par rapport à celui-ci.

L'organe de transmission 28 est monté axialement entre deux paliers 31, 32 formés ici par des butées à roulement, plus particulièrement des butées à billes. Un premier palier 31 est intercalé axialement entre la périphérie radialement interne du diaphragme 18 et l'organe de transmission 28. Un second palier 32 est intercalé axialement entre l'organe de transmission 28 et l'organe d'actionnement 23. Une rondelle 33 peut être intercalée axialement entre chaque palier 31, 32 et l'organe de transmission 28.

De cette manière, l'organe de transmission 28 est déplacé axialement avec l'organe de commande 23 de la butée d'embrayage 21.

Le voile annulaire 47 est interposé entre le diaphragme 18 et l'organe de transmission 28, plus précisément entre le diaphragme 18 et le palier 31. Le voile annulaire 47 vient en appui par sa périphérie radialement intérieure sur le palier 31 exerçant ainsi un effort axial vers l'avant sur l'organe de transmission 28.

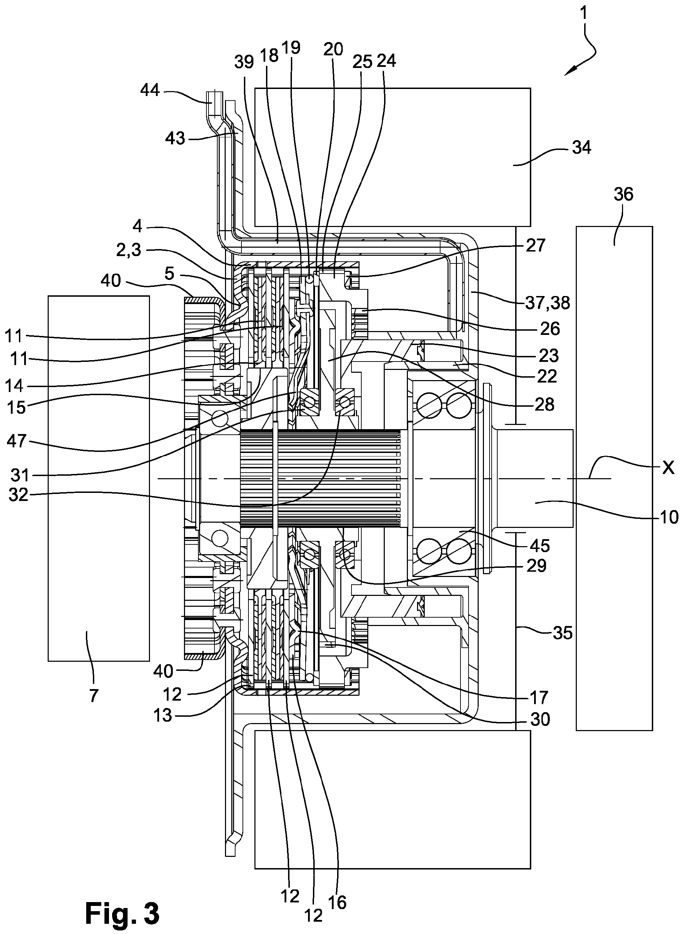

Le couvercle 2 est destiné à être couplé en rotation avec le vilebrequin du moteur à combustion interne 7 d'un véhicule automobile, illustré schématiquement à la figure 3. Un dispositif d'amortissement de torsion peut également être disposé entre le moteur à combustion interne 7 et le couvercle 7.

Un rotor 34 d'une machine électrique est couplé en rotation, via un support 35 par exemple, à l'arbre d'entrée 10 de la boîte de vitesses 36. Un tel couplage peut être assuré par tous moyens. En variante, le couvercle additionnel 37 peut prendre la fonction de support de rotor auquel cas un support 35 spécifiquement dédié au rotor 34 n'est pas nécessaire.

La machine électrique est par exemple une machine électrique tournante réversible du type alterno-démarreur ou du type moteur-générateur.

En fonctionnement, l'organe de transmission peut être déplacé entre trois positions axiales, représentées respectivement aux figures 3, 4, 5.

Comme illustré à la figure 3, lorsque l'organe de commande 23 et l'organe de transmission 28 mobiles sont déplacés vers l'arrière, c'est-à-dire vers la gauche sur les figures, le palier 31 vient actionner le diaphragme 18 de manière à le déplacer vers sa position embrayée, dans laquelle il rapproche axialement les plateaux 12 de la partie radiale 3 du couvercle 2. De cette manière, les disques de friction 11 sont enserrés entre les plateaux 12 et le couvercle 2 est couplé en rotation à l'arbre d'entrée 10 de la boîte de vitesses 36 par l'intermédiaire des plateaux 12, des disques de friction 11 et du moyeu central 8.

En d'autres termes, dans cette position, le rotor 34 est couplé en rotation au vilebrequin du moteur à combustion interne 7.

On notera que, dans cette position, l'organe de transmission 28 est découplé de l'organe de liaison 24.

Un tel mode de fonctionnement peut notamment être utilisé dans le cas où l'on souhaite redémarrer le moteur à combustion interne 7 à l'aide de la machine électrique qui fonctionne alors en mode moteur (Fonction Stop and Go, en anglais). L'arrêt du moteur à combustion interne peut notamment être commandé lors l'arrêt de courte durée du véhicule, par exemple dans le cas d'un feu rouge ou dans des bouchons. Le couple nécessaire pour redémarrer le moteur à combustion interne 7 étant faible, les disques peuvent être axialement compacts et les surfaces de frottement réduites.

Dans ce cas, le couple généré par le rotor 34 de la machine électrique, est transmis à l'arbre d'entrée 10 de la boîte de vitesses 36 par l'intermédiaire du support 35, puis au vilebrequin par l'intermédiaire du couvercle 2 et des moyens d'embrayage précités. On peut alors contrôler efficacement le couple transmis au vilebrequin, de façon à éviter toute détérioration du moteur thermique 7 et du dispositif de transmission de couple 1.

Comme illustré à la figure 4, lorsque l'organe de commande 23 et l'organe de transmission 28 mobiles sont déplacés vers l'avant, c'est-à-dire vers la droite sur les figures, l'organe de transmission 28 vient engrener à la fois avec l'organe de liaison 24 et avec l'arbre d'entrée 10 de la boîte de vitesses.

Le vilebrequin du moteur à combustion interne 7 est alors couplé en rotation à l'arbre d'entrée 10 de la boîte de vitesses 36, par l'intermédiaire du couvercle 2, de l'organe de liaison 24 et de l'organe de transmission 28.

Le passage de couple est ainsi réalisé de façon directe entre le vilebrequin et l'arbre d'entrée 10 de la boîte de vitesses 36, c'est-à-dire sans utilisation de moyens d'embrayage. Le passage de couple par engrenage permet de passer un couple conséquent, notamment beaucoup plus important que le couple généré par le pincement des disques de friction.

Un tel mode de fonctionnement peut notamment être utilisé pour entraîner l'arbre d'entrée 10 de la boîte de vitesses 36 à l'aide du moteur à combustion interne 7, lorsque celui-ci est démarré. Dans un tel cas, la machine électrique peut fonctionner en mode générateur ou alternateur, afin de recharger une batterie du véhicule et/ou d'alimenter les organes ou équipements consommateurs d'énergie lorsque le moteur à combustion interne 7 tourne. La machine électrique peut en outre configurée pour récupérer de l'énergie lors du freinage du véhicule.

Dans ce mode de fonctionnement également, la machine électrique est apte à fournir un surplus de puissance permettant d'éviter que le moteur à combustion interne 7 cale (fonction boost en Anglais).

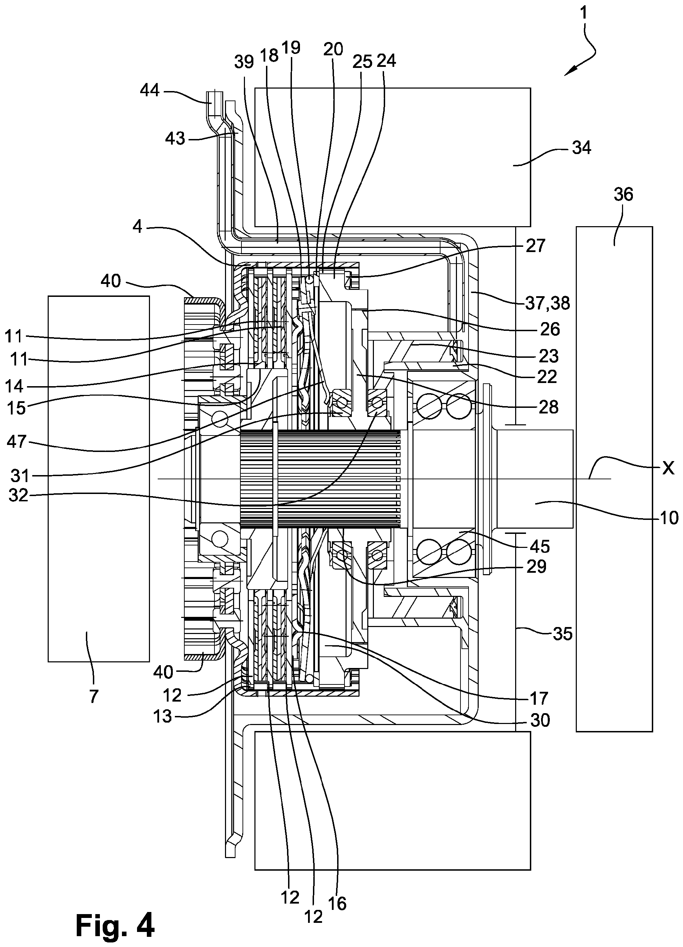

Enfin, comme illustré à la figure 5, lorsque l'organe de commande 23 et l'organe de transmission 28 mobiles sont déplacés vers une position axialement médiane, située entre les positions axiales arrière et avant des figures 3 et 4, l'organe de transmission 28 est couplé uniquement à l'arbre d'entrée 10 de la boîte de vitesses 36, l'organe de commande 28 et le palier 31 notamment ne repoussant pas le diaphragme 18 vers sa position embrayée. Dans cette position, l'élasticité du diaphragme 18 le rappelle ainsi vers sa position de repos, à savoir sa position débrayée.

Le voile 47 en exerçant un effort axial vers l'avant sur l'organe d'actionnement 28 lorsque le diaphragme 18 est dans une position embrayée, tend à ramener l'organe d'actionnement 28 dans la position qu'il occupe dans le troisième mode de fonctionnement.

En d'autres termes, dans cette position médiane, le vilebrequin et le couvercle 2 sont découplés de l'arbre d'entrée 10 de la boîte de vitesses 36 et du rotor 34 de la machine électrique.

L'arbre d'entrée 10 de la boîte de vitesses 36 et du rotor de la machine électrique restent couplés en rotation. Dans un tel mode de fonctionnement, la machine électrique peut alors être apte à entraîner l'arbre d'entrée 10 de la boîte de vitesses 36, et donc le véhicule, au moins sur une courte distance.

On notera que, pour passer de sa position arrière (figure 3) à sa position avant (figure 4), l'organe de transmission 28 doit nécessairement passer par sa position axialement médiane (figure 5), de sorte qu'il n'existe pas de point de fonctionnement dans lequel les deux modes de fonctionnement décrits précédemment en référence aux figures 4 et 5 peuvent être engagés simultanément, ce qui améliore le fonctionnement du dispositif 1.

L'invention propose ainsi un dispositif de transmission de couple fiable, peu encombrant axialement et radialement, peu complexe et peu onéreux, par comparaison avec l'art antérieur.

## Revendications

1. Dispositif (1) de transmission de couple, notamment pour véhicule automobile, comportant des moyens (2, 24) d'entrée de couple, destinés à être couplés en rotation à un vilebrequin d'un moteur à combustion interne (7), des moyens de sortie de couple (8), destinés à être couplés en rotation à un arbre d'entrée (10) d'une boîte de vitesses (36) et à un rotor (34) d'une machine électrique, les moyens (2, 24) d'entrée de couple étant aptes à pivoter par rapport aux moyens (8) de sortie de couple autour d'un axe (X),
ledit dispositif comportant des moyens de commande sélectivement aptes à :
- dans un premier mode de fonctionnement, coupler en rotation les moyens (2, 24) d'entrée de couple et les moyens (8) de sortie de couple, par un premier chemin de passage de couple comportant des moyens d'embrayage (11, 12, 18), ou
- dans un second mode de fonctionnement, coupler en rotation les moyens (2, 24) d'entrée de couple et les moyens (8) de sortie de couple, par un second chemin de passage de couple dépourvu de moyens d'embrayage,
- dans un troisième mode de fonctionnement, découpler en rotation les moyens (2, 24) d'entrée de couple et les moyens (8) de sortie de couple,
les moyens de commande comportant une butée d'embrayage (21) comprenant un organe d'actionnement (23) mobile entre :
- une première position axiale correspondant au premier mode de fonctionnement, et
- une seconde position axiale correspondant au second mode de fonctionnement, et
- une troisième position axiale correspondant au troisième mode de fonctionnement,
**caractérisé en ce que** la troisième position axiale est située axialement entre les première et seconde positions axiales.

2. Dispositif (1) selon la revendication 1, caractérisé en les moyens de commande comportent un organe de transmission (28) comprenant une première zone de couplage (29) destinée à être couplée en rotation à l'arbre d'entrée (10) de la boîte de vitesses (36), et une seconde zone de couplage (30), l'organe de transmission (28) étant mobile axialement avec l'organe d'actionnement mobile (23) de la butée d'embrayage (21), la seconde zone de couplage (30) étant couplée aux moyens (2, 24) d'entrée de couple dans la deuxième position axiale.

3. Dispositif (1) selon la revendication 2, **caractérisé en ce que** la première zone de couplage (29) est située radialement à l'intérieur de l'organe de transmission (28), la seconde zone de couplage (30) étant située radialement à l'extérieur de l'organe de transmission (28).

4. Dispositif (1) selon l'une des revendications précédentes, **caractérisé en ce que** les moyens d'embrayage comportent au moins deux plateaux (12) et au moins un disque de friction (11) situé axialement entre les deux plateaux (12), le disque de friction (11), ou respectivement les plateaux (12), étant couplé en rotation à un moyeu (8) appartenant aux moyens de sortie de couple, les plateaux (12), respectivement le disque de friction (11), étant couplés aux moyens (2, 24) d'entrée de couple, les plateaux (12) étant rapprochés axialement l'un de l'autre de façon à enserrer le disque de friction (11) dans le premier mode de fonctionnement.

5. Dispositif (1) selon la revendication 4, **caractérisé en ce que** les moyens d'embrayage comportent un diaphragme (18) apte à basculer entre une position embrayée dans laquelle il tend à enserrer le disque de friction (11) entre les plateaux (12), et une position débrayée dans laquelle il libère le disque de friction (11), l'organe d'actionnement (23) étant apte à venir en appui sur le diaphragme (18) de manière à le déplacer vers sa position embrayée dans la première position axiale de l'organe d'actionnement (23).

6. Dispositif (1) selon la revendication 5, **caractérisé en ce que** le diaphragme (18) est annulaire, l'organe d'actionnement (23) venant en appui sur la périphérie radialement interne du diaphragme (18) dans la première position axiale, le diaphragme (18) étant monté basculant autour d'une première zone d'appui (19) radialement externe, le diaphragme (18) venant en appui sur l'un des plateaux (12), directement ou indirectement, dans une seconde zone d'appui (17) située radialement à l'intérieur de la première zone d'appui (19).

7. Dispositif (1) selon l'une des revendications 1 à 6, **caractérisé en ce que** les moyens d'entrée de couple comportent un couvercle (2) logeant, au moins en partie, les moyens d'embrayage (11, 12, 18), l'organe d'actionnement (23), l'organe de transmission (28) et/le moyeu (8).

8. Dispositif (1) selon la revendication 2 ou 3 et selon la revendication 7, **caractérisé en ce que** les moyens d'entrée de couple comportent un organe de liaison (24) couplé en rotation au couvercle (2), la seconde zone de couplage (30) de l'organe de transmission (28) venant en prise avec l'organe de liaison (24), dans la deuxième position axiale de l'organe d'actionnement (23) et de l'organe de transmission (28).

9. Système de motorisation hybride comprenant :
- un moteur à combustion interne (7) comportant un vilebrequin apte à être entraîné en rotation autour d'un axe (X),
- une machine électrique comportant un stator et un rotor (34) apte à être entraîné en rotation par rapport au stator autour de l'axe (X),
- une boîte de vitesses (36) comportant un arbre d'entrée (10),
- un dispositif (1) de transmission de couple selon l'une des revendications 1 à 8,
le rotor (34), l'arbre d'entrée (10) de la boîte de vitesses (36) et les moyens de sortie de couple (8) étant couplés en rotation,
- les moyens (2, 24) d'entrée de couple et le vilebrequin étant couplés en rotation.

## Patentansprüche

1. Drehmomentübertragungsvorrichtung (1), insbesondere für ein Kraftfahrzeug, die Drehmomenteingangseinrichtungen (2, 24), die dazu bestimmt sind, in Drehung mit einer Kurbelwelle eines Verbrennungsmotors (7) gekoppelt zu werden, und Drehmomentausgangseinrichtungen (8) aufweist, die dazu bestimmt sind, in Drehung mit einer Eingangswelle (10) eines Schaltgetriebes (36) und mit einem Rotor (34) einer elektrischen Maschine gekoppelt zu werden, wobei die Drehmomenteingangseinrichtungen (2, 24) bezüglich der Drehmomentausgangseinrichtungen (8) um eine Achse (X) schwenken können, wobei die Vorrichtung Steuereinrichtungen aufweist, die selektiv fähig sind:
- in einer ersten Betriebsart die Drehmomenteingangseinrichtungen (2, 24) und die Drehmomentausgangseinrichtungen (8) über einen ersten Drehmoment-Durchgangsweg in Drehung zu koppeln, der Kupplungseinrichtungen (11, 12, 18) aufweist, oder
- in einer zweiten Betriebsart die Drehmomenteingangseinrichtungen (2, 24) und die Drehmomentausgangseinrichtungen (8) über einen zweiten Drehmoment-Durchgangsweg zu koppeln, der keine Kupplungseinrichtungen aufweist,
- in einer dritten Betriebsart die Drehmomenteingangseinrichtungen (2, 24) und die Drehmomentausgangseinrichtungen (8) in Drehung zu entkoppeln,
wobei die Steuereinrichtungen einen Kupplungsanschlag (21) aufweisen, der ein Betätigungsorgan (23) enthält, das beweglich ist zwischen:
- einer ersten axialen Stellung, die der ersten Betriebsart entspricht, und
- einer zweiten axialen Stellung, die der zweiten Betriebsart entspricht, und
- einer dritten axialen Stellung, die der dritten Betriebsart entspricht,
**dadurch gekennzeichnet, dass** die dritte axiale Stellung sich axial zwischen der ersten und der zweiten axialen Stellung befindet.

2. Vorrichtung (1) nach Anspruch 1, **dadurch gekennzeichnet, dass** die Steuereinrichtungen ein Übertragungsorgan (28) aufweisen, das eine erste Kopplungszone (29), die dazu bestimmt ist, in Drehung mit der Eingangswelle (10) des Schaltgetriebes (36) gekoppelt zu werden, und eine zweite Kopplungszone (30) enthält, wobei das Übertragungsorgan (28) mit dem beweglichen Betätigungsorgan (23) des Kupplungsanschlags (21) axial beweglich ist, wobei die zweite Kopplungszone (30) in der zweiten axialen Stellung mit den Drehmomenteingangseinrichtungen (2, 24) gekoppelt ist.

3. Vorrichtung (1) nach Anspruch 2, **dadurch gekennzeichnet, dass** die erste Kopplungszone (29) sich radial innerhalb des Übertragungsorgans (28) befindet, während die zweite Kopplungszone (30) sich radial außerhalb des Übertragungsorgans (28) befindet.

4. Vorrichtung (1) nach einem der vorhergehenden Ansprüche, **dadurch gekennzeichnet, dass** die Kupplungseinrichtungen mindestens zwei Platten (12) und mindestens eine Reibscheibe (11) aufweisen, die sich axial zwischen den zwei Platten (12) befindet, wobei die Reibscheibe (11) bzw. die Platten (12) in Drehung mit einer Nabe (8) gekoppelt sind, die zu den Drehmomentausgangseinrichtungen gehört, wobei die Platten (12) bzw. die Reibscheibe (11) mit den Drehmomenteingangseinrichtungen (2, 24) gekoppelt sind, wobei die Platten (12) in der ersten Betriebsart axial einander angenähert werden, um die Reibscheibe (11) einzuspannen.

5. Vorrichtung (1) nach Anspruch 4, **dadurch gekennzeichnet, dass** die Kupplungseinrichtungen eine Membran (18) aufweisen, die zwischen einer eingekuppelten Stellung, in der sie dazu neigt, die Reibscheibe (11) zwischen den Platten (12) einzuspannen, und einer ausgekuppelten Stellung kippen kann, in der sie die Reibscheibe (11) freigibt, wobei das Betätigungsorgan (23) so auf der Membran (18) in Auflage kommen kann, dass es sie in der ersten axialen Stellung des Betätigungsorgans (23) in ihre eingekuppelte Stellung verschiebt.

6. Vorrichtung (1) nach Anspruch 5, **dadurch gekennzeichnet, dass** die Membran (18) ringförmig ist, wobei das Betätigungsorgan (23) in der ersten axialen Stellung auf dem radial inneren Umfang der Membran (18) in Auflage kommt, wobei die Membran (18) um eine radial äußere erste Auflagezone (19) kippbar montiert ist, wobei die Membran (18) auf einer der Platten (12) direkt oder indirekt in einer zweiten Auflagezone (17) in Auflage kommt, die sich radial innerhalb der ersten Auflagezone (19) befindet.

7. Vorrichtung (1) nach einem der Ansprüche 1 bis 6, **dadurch gekennzeichnet, dass** die Drehmomenteingangseinrichtungen einen Deckel (2) aufweisen, der die Kupplungseinrichtungen (11, 12, 18), das Betätigungsorgan (23), das Übertragungsorgan (28) und die Nabe (8) zumindest teilweise aufnimmt.

8. Vorrichtung (1) nach Anspruch 2 oder 3 und nach Anspruch 7, **dadurch gekennzeichnet, dass** die Drehmomenteingangseinrichtungen ein Verbindungsorgan (24) aufweisen, das in Drehung mit dem Deckel (2) gekoppelt ist, wobei die zweite Kopplungszone (30) des Übertragungsorgans (28) in der zweiten axialen Stellung des Betätigungsorgans (23) und des Übertragungsorgan (28) mit dem Verbindungsorgan (24) in Eingriff kommt.

9. Hybridantriebssystem, das enthält:
- einen Verbrennungsmotor (7), der eine Kurbelwelle aufweist, die um eine Achse (X) in Drehung versetzt werden kann,
- eine elektrische Maschine, die einen Stator und einen Rotor (34) aufweist, der bezüglich des Stators um die Achse (X) in Drehung versetzt werden kann,
- ein Schaltgetriebe (36), das eine Eingangswelle (10) aufweist,
- eine Drehmomentübertragungsvorrichtung (1) nach einem der Ansprüche 1 bis 8,
- wobei der Rotor (34), die Eingangswelle (10) des Schaltgetriebes (36) und die Drehmomentausgangseinrichtungen (8) in Drehung gekoppelt sind,
- wobei die Drehmomenteingangseinrichtungen (2, 24) und die Kurbelwelle in Drehung gekoppelt sind.

## Claims

1. Torque transmission device (1), in particular for a motor vehicle, comprising torque input means (2, 24) designed to be rotationally coupled to a crankshaft of an internal combustion engine (7), torque output means (8) designed to be rotationally coupled to an input shaft (10) of a gearbox (36) and to a rotor (34) of an electric machine, the torque input means (2, 24) being capable of pivoting relative to the torque output means (8) about an axis (X), said device comprising control means, selectively capable:
- in a first operating mode, of rotationally coupling the torque input means (2, 24) and the torque output means (8) via a first torque transfer path having clutch means (11, 12, 18), or
- in a second operating mode, of rotationally coupling the torque input means (2, 24) and the torque output means (8) via a second torque transfer path having no clutch means,
- in a third operating mode, of rotationally decoupling the torque input means (2, 24) and the torque output means (8),
the control means comprising a clutch release bearing (21) comprising an actuating member (23) which is movable between:
- a first axial position corresponding to the first operating mode, and
- a second axial position corresponding to the second operating mode, and
- a third axial position corresponding to the third operating mode,
**characterized in that** the third axial position is located axially between the first and second axial positions.

2. Device (1) according to Claim 1, **characterized in that** the control means comprise a transmission member (28) comprising a first coupling zone (29) designed to be rotationally coupled to the input shaft (10) of the gearbox (36) and a second coupling zone (30), the transmission member (28) being axially movable with the movable actuating member (23) of the clutch release bearing (21), and the second coupling zone (30) being coupled to the torque input means (2, 24) in the second axial position.

3. Device (1) according to Claim 2, **characterized in that** the first coupling zone (29) is located radially inside the transmission member (28), the second coupling zone (30) being located radially outside the transmission member (28).

4. Device (1) according to one of the preceding claims, **characterized in that** the clutch means comprise at least two plates (12) and at least one friction disk (11) located axially between the two plates (12), the friction disk (11) or respectively the plates (12) being rotationally coupled to a hub (8) belonging to the torque output means, the plates (12), respectively the friction disk (11), being coupled to the torque input means (2, 24), and the plates (12) being brought axially closer together so as to clamp the friction disk (11) in the first operating mode.

5. Device (1) according to Claim 4, **characterized in that** the clutch means comprise a diaphragm (18) capable of tilting between an engaged position in which it tends to clamp the friction disk (11) between the plates (12), and a disengaged position in which it releases the friction disk (11), the actuating member (23) being capable of bearing against the diaphragm (18) so as to displace it into its engaged position in the first axial position of the actuating member (23).

6. Device (1) according to Claim 5, **characterized in that** the diaphragm (18) is annular, the actuating member (23) bearing against the radially internal periphery of the diaphragm (18) in the first axial position, the diaphragm (18) being mounted so as to tilt about a first radially external bearing zone (19), and the diaphragm (18) bearing against one of the plates (12), directly or indirectly, in a second bearing zone (17) located radially inside the first bearing zone (19).

7. Device (1) according to one of Claims 1 to 6, **characterized in that** the torque input means comprise a cover (2) which houses, at least partially, the clutch means (11, 12, 18), the actuating member (23), the transmission member (28) and/ the hub (8).

8. Device (1) according to Claim 2 or 3, and according to Claim 7, **characterized in that** the torque input means comprise a connecting member (24) rotationally coupled to the cover (2), the second coupling zone (30) of the transmission member (28) being engaged with the connecting member (24) in the second axial position of the actuating member (23) and the transmission member (28).

9. Hybrid drive system comprising:
- an internal combustion engine (7) comprising a crankshaft capable of being rotationally driven about an axis (X),
- an electric machine comprising a stator and a rotor (34) capable of being rotationally driven relative to the stator about the axis (X),
- a gearbox (36) comprising an input shaft (10),
- a torque transmission device (1) according to one of Claims 1 to 8,
- the rotor (34), the input shaft (10) of the gearbox (36) and the torque output means (8) being rotationally coupled,
- the torque input means (2, 24) and the crankshaft being rotationally coupled.
